Europäisches Patentamt

European Patent Office

Office européen des brevets

(11) Numéro de publication: **0 224 419**
**A1**

## (12) DEMANDE DE BREVET EUROPEEN

(21) Numéro de dépôt: **86420254.4**

(22) Date de dépôt: **16.10.86**

(51) Int. Cl.⁴: **B 23 Q 9/02**
**B 23 Q 35/10, B 24 B 9/00**

(30) Priorité: **18.10.85 FR 8515928**

(43) Date de publication de la demande:
**03.06.87 Bulletin 87/23**

(84) Etats contractants désignés:
**BE CH DE ES FR IT LI**

(71) Demandeur: **INNOVATION POUR L'USINAGE SUR SITE -I PLUS (société à responsabilité limitée)**
**Les Vignes Villaz**
**F-74370 Pringy (FR)**

(72) Inventeur: **Zammit, Guy**
**Les Vignes Villaz**
**F-74370 Pringy (FR)**

(74) Mandataire: **de Beaumont, Michel**
**Cabinet Poncet 7, chemin de Tillier B.P. 317**
**F-74008 Annecy Cédex (FR)**

(54) **Procédé et dispositif d'usinage ou de contrôle sur site pour pièces rotatives.**

(57) Le dispositif comprend un outil d'usinage par enlèvement de matière (6) monté sur un chariot suiveur (14) sollicité par un ressort (17). Le chariot suiveur (14) a sa course centripète limitée par un rouleau suiveur (24) venant en appui contre un gabarit (25) extérieur rapporté sur la surface extérieure de la virole (1) portant le bandage (3) à traiter. Le gabarit (25) est circulaire, et sa position est réglable par rapport à la virole (1). Le dispositif s'applique notamment au réusinage de bandages pour fours à ciment.

FIG. 1

EP 0 224 419 A1

## Description

PROCEDE ET DISPOSITIF D'USINAGE OU DE CONTROLE SUR SITE POUR PIECES ROTATIVES

La présente invention concerne un procédé et un dispositif permettant l'usinage et/ou le contrôle sur site de pièces rotatives de grandes dimensions.

On connaît des outiles d'usinage tels que des meules, des bandes abrasives, des tours, permettant l'usinage de pièces par enlèvement de matière.

Toutefois l'emploi de tels outils connus est délicat lorsqu'il s'agit d'usiner des pièces de grandes dimensions : il faut alors utiliser des tours admettant les pièces de grand diamètre, et de tels outils sont très rares et entraînent des délais d'exécution très importants. Il faut en outre transporter la pièce à usiner sur le site de l'outil. Un tel transport peut s'avérer très délicat, voire impossible.

Pour l'usinage de pièces rotatives de grandes dimensions, on est conduit à utiliser un dispositif transportable permettant d'usiner les pièces sur leur propre site, sans nécessiter leur déplacement. Ainsi, le document US-A-2 748 642 décrit un dispositif permettant de réaliser l'usinage sur site d'une poulie de mine, montée rotative sur un axe fixe et sollicitée par ses propres moyens d'entraînement. Le dispositif comprend un outil d'usinage porté par un support fixe, l'outil d'usinage étant monté sur un chariot suiveur dont la position verticale est fixe par rapport au support fixe et dont la position radiale est variable par rapport à la poulie ; le chariot suiveur est poussé en direction de la gorge de poulie à usiner par un contrepoids, et comprend un rouleau suiveur en appui sur la gorge de poulie à usiner. De cette manière, le chariot et l'outil suivent les mouvements radiaux produits par les distorsions et les excentricités de la gorge par rapport à l'axe de rotation fixe. Il en résulte qu'il est impossible, avec un tel dispositif, de maîtriser l'usinage d'une pièce rotative, en lui donnant par exemple une excentricité déterminée par rapport à son axe de rotation fixe ; il n'est pas possible non plus de maîtriser l'usinage d'une pièce montée rotative autour d'un axe mobile dans l'espace, comme c'est le cas par exemple de tubes tournants reposant sur des galets par l'intermédiaire de bandages usés.

L'invention a notamment pour objet de réaliser un contrôle ou un usinage correct, tout en faisant tourner la pièce sur ses supports naturels, même lorsque la rotation de la pièce ne s'effectue pas autour de l'axe moyen ou de l'axe de symétrie désiré de la surface à usiner. Dans ce cas, la rotation de la pièce produit des mouvements d'oscillation latérale irréguliers de la surface à usiner par rapport au sol ou au support fixe, mouvements qui sont compensés par le procédé et le dispositif selon l'invention de manière que les outils effectuent l'usinage en tenant compte des mouvement désordonnés et inévitables de la surface. On peut ainsi maîtriser totalement le réusinage des surfaces usées, par exemple pour leur donner une forme déterminée et centrée par rapport à un axe choisi arbitrairement.

L'invention est particulièrement utile pour effectuer l'usinage ou le contrôle de surfaces rotatives lorsque ces surfaces ne sont pas perpendiculaires à leur axe de rotation.

L'invention permet notamment l'usinage des bandages de tubes tournants reposant sur des galets par l'intermédiaire de ces bandages. L'usure progressive des bandages provoque, lors de la rotation du tube, des vibrations néfastes qui elles-mêmes accélèrent l'usure ultérieure des bandages et des galets. Il s'ensuit que les bandages périphériques deviennent non circulaires, la rotation du tube s'effectuant alors de manière décentrée et son axe longitudinal moyen devenant mobile.

Le dispositif selon l'invention est facilement transportable, car particulièrement simple et peu encombrant ; le dispositif est démontable, et est constitué de pièces aisément manipulables sans nécessiter de moyens de levage exceptionnels.

Selon un autre objet de l'invention, le dispositif et le procédé permettent un usinage de bonne qualité, et sont capables de réaliser des surfaces de révolution ou non, par exemple un secteur ou la totalité d'un cylindre de révolution, d'un cône, d'une couronne.

Selon l'invention, on usine ou contrôle la pièce pendant son fonctionnement normal, ce qui réduit son temps d'indisponibilité et améliore la précision obtenue car la pièce se trouve dans les conditions réelles d'utilisation.

Selon un autre objet de l'invention, le dispositif permet la réalisation d'une surface correcte en minimisant l'enlèvement de matière.

Pour atteindre ces objets ainsi que d'autres, le procédé d'usinage ou de contrôle selon l'invention consiste à entraîner la pièce à usiner par ses propres moyens d'entraînement, et à faire défiler la surface à usiner devant l'outil d'usinage ou le capteur de contrôle. Dans la description qui suit, et dans les revendications, on entend par "première direction sécante" une première direction, contenue dans un plan sécant sensiblement perpendiculaire à l'axe de rotation moyen de la surface à usiner, et comportant une composante tangentielle non nulle par rapport à cette surface, et on entend par "seconde direction sécante" une seconde direction, non parallèle à la première, contenue dans le même plan sécant et comportant une composante radiale non nulle par rapport à la surface à usiner. L'outil est maintenu fixe selon une première direction sécante par rapport à un support fixe qui reprend les efforts d'usinage selon cette première direction, l'outil étant mobile et poussé vers la surface à usiner selon une seconde direction sécante, sa position étant commandée par des moyens suiveurs liés aux mouvements d'oscillation latérale d'un axe moyen choisi de la surface à usiner selon cette seconde direction sécante. L'axe moyen peut être choisi librement par l'utilisateur, c'est-à-dire sans que l'utilisateur soit obligé de tenir compte de la forme de la surface avant usinage. L'outil ou le capteur suit fidèlement les mouvements d'oscillation latérale de l'axe choisi de la pièce à usiner, ou mouvements selon la seconde direction sécante.

Selon l'invention, dans un premier mode de réalisation, on définit les moyens suiveurs en choisissant un axe moyen de la surface à usiner, ou axe théorique ; on positionne un arbre support à l'intérieur de la surface à usiner et selon l'axe moyen, en le solidarisant par rapport à la surface à usiner ; on relie l'outil et l'arbre support par un bras de liaison monté rotatif en bout d'arbre support, l'outil étant mobile par rapport au bras de liaison par l'intermédiaire de moyens de réglage en position radiale et longitudinale. Un tel procédé est adapté à l'usinage de pièces dans lesquelles on a accès à l'intérieur de la surface à usiner, pour solidariser un arbre support ; en outre la pièce ne doit pas être trop longue, pour éviter les grandes portées entre le bras de liaison, qui est nécessairement en extrémité de la pièce à usiner, et l'outil d'usinage qui est en face de la surface à usiner.

Dans le cas des pièces de grande longueur, telles que les fours à ciment, on préfère un second mode de réalisation, dans lequel les moyens suiveurs sont définis de la manière suivante : on choisit un axe moyen de la surface à usiner ; on solidarise un gabarit annulaire à l'extérieur de la surface à usiner, le gabarit étant centré sur l'axe moyen choisi. La forme extérieure du gabarit permet de lisser les irrégularités de la surface à usiner ; on utilise des moyens de réglage en position pour centrer le gabarit par rapport à l'axe moyen désiré. Le gabarit peut être positionné, dans le sens longitudinal, à proximité de la surface à usiner, évitant une trop grande portée entre l'outil et le gabarit.

Le dispositif selon l'invention comprend un outil d'usinage, monté sur un chariot suiveur maintenu fixe par rapport à un support fixe selon la première direction sécante et mobile par rapport au support fixe selon la seconde direction sécante ; le chariot suiveur est poussé vers la surface par des moyens pousseurs, et est monté mobile sur un chariot intermédiaire solidaire d'un bâti fixe ; le chariot suiveur est sollicité par des moyens suiveurs liés aux mouvements d'un axe moyen choisi de la surface à usiner selon la seconde direction sécante, de sorte que la position instantanée de l'outil par rapport au support fixe selon la seconde direction sécante est commandée par les moyens suiveurs en fonction de la position instantanée de l'axe moyen choisi de la pièce à usiner selon cette même seconde direction sécante.

Selon un mode de réalisation, la première direction sécante est une direction tangente à la surface à usiner, et la seconde direction sécante est une direction radiale, perpendiculaire à la surface à usiner.

La liaison par laquelle les moyens suiveurs sollicitent et commandent le chariot suiveur peut être de plusieurs types, notamment selon les types d'outils utilisés, meule, bande, outil coupant ou autre : par exemple une liaison positive selon laquelle le chariot suit fidèlement les mouvements de l'axe moyen selon la seconde direction sécante ; ou une liaison simple selon laquelle les moyens suiveurs forment butée limitant la progression du chariot suiveur en direction de l'axe moyen et définissant la fin de course d'usinage ; il peut par ailleurs s'agir d'une liaison mécanique directe, ou d'une liaison optique, ou de tout autre moyen permettant de suivre les mouvements de l'axe moyen.

Selon un mode de réalisation de l'invention, les moyens suiveurs comprennent un bras de liaison radial monté rotatif en bout d'un arbre support solidarisé à la surface à usiner selon son axe moyen, le chariot suiveur étant monté à coulissement par rapport au bras radial et venant buter contre le bras en fin de course d'usinage.

Selon un autre mode de réalisation, les moyens suiveurs comprennent un gabarit extérieur annulaire solidarisé à la surface à usiner par des moyens de fixation permettant de le positionner de manière centrée par rapport à un axe de référence choisi ; le chariot suiveur vient en butée contre le gabarit extérieur en fin de course d'usinage. De préférence, le gabarit extérieur comprend plusieurs secteurs circulaires assemblables bout à bout, des éléments supports intercalaires destinés à relier le gabarit extérieur à la pièce à usiner, des moyens de fixation pour adapter les éléments supports intercalaires sur la pièce à usiner, et des moyens de réglage en position radiale et de fixation du gabarit sur les éléments supports intercalaires.

D'autres objets, caractéristiques et avantages de la présente invention ressortiront de la description suivante de modes de réalisation particuliers, faite en relation avec les figures jointes parmi lesquelles :
- la figure 1 est une vue en bout du dispositif de la présente invention en position d'usinage des bandages d'un tube tournant ;
- la figure 2 est une vue de côté droit de l'ensemble de la figure 1 ;

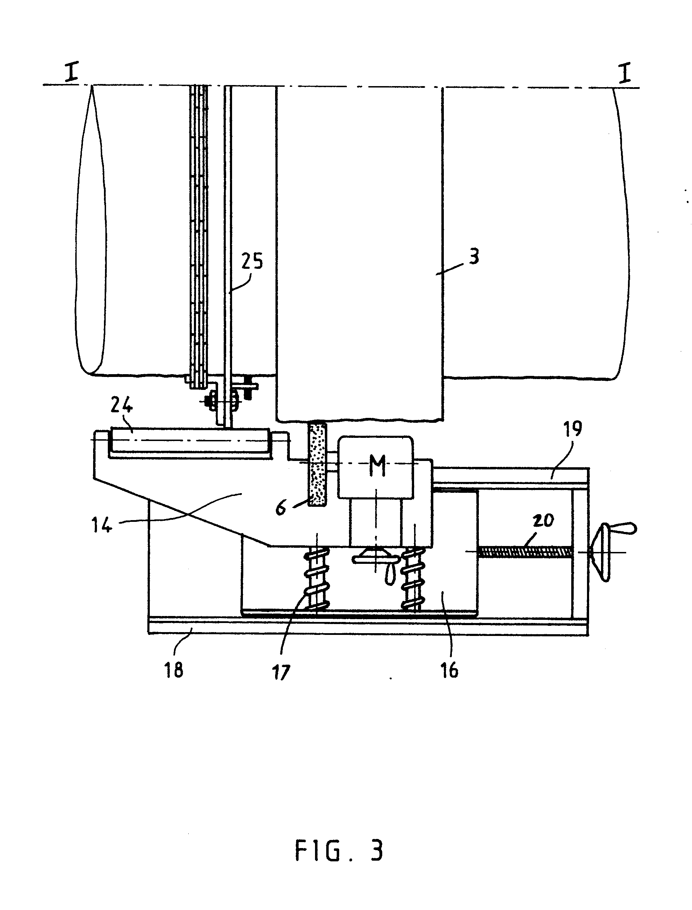

- la figure 3 est une vue de dessus partielle de l'ensemble de la figure 1 ; et
- les figures 4 et 5 illustrent un mode de réalisation d'un gabarit circulaire formant butée selon l'invention.

Comme le représentent les figures, au moins partiellement, le dispositif à usiner comprend notamment un tube creux ou virole 1, destiné à tourner autour d'un axe longitudinal I-I pour le brassage du produit contenu dans l'espace intérieur 2. La virole 1 présente généralement un diamètre de plusieurs mètres, par exemple de l'ordre de cinq mètres. Pour sa rotation, la virole 1 est munie, sur certaines portions de sa surface extérieure, de bandages tels que le bandage 3 qui repose sur deux galets 4 et 5 fixés au sol. La virole 1 est entraînée en rotation autour de son axe longitudinal I-I par des moyens d'entraînement propres au dispositif à usiner, et non représentés sur les figures.

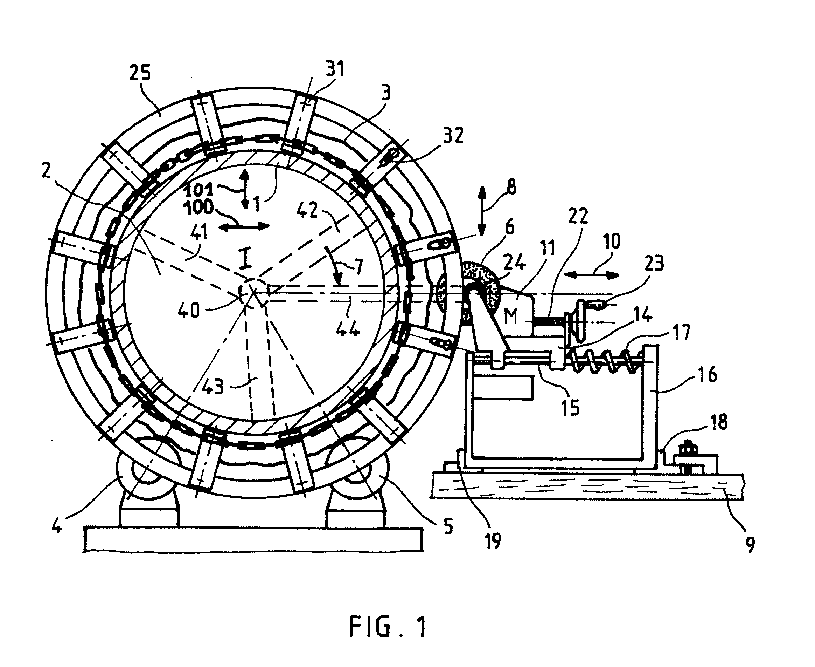

On a représenté sur la figure 1 un bandage 3 présentant une surface extérieure irrégulière, provoquant, lors de la rotation de la virole, des vibrations et des déplacements de l'axe longitudinal I-I du tube, et notamment des mouvements d'oscillation latérale présentant une composante horizontale représentée par la double flèche 100 et une composante verticale représentée par la double flèche 101. Sur la figure, les défauts ont été volontairement exagérés, pour faciliter la compréhension.

La surface extérieure du bandage 3 est usinée selon l'invention au moyen de l'outil 6, disposé par exemple selon l'un des côtés du tube en regard de la surface extérieure du bandage 3.

Dans le mode de réalisation représenté sur les figures, l'outil 6 est une meule. On pourra toutefois, sans sortir du cadre de l'invention, utiliser d'autres outils d'enlèvement de matière appropriés à chaque usinage de matière. On pourra préférer un outil 6 formé d'une bande abrasive, par exemple une bande tendue entre deux rouleaux, de manière connue. Dans certains cas on pourra également utiliser un outil coupant.

Le procédé selon l'invention consiste à entraîner en rotation, par exemple dans le sens de la flèche 7, par ses propres moyens d'entraînement, la virole 1 pendant le fonctionnement de l'outil 6. L'outil 6 est maintenu fixe selon une première direction sécante, que l'on choisit par exemple tangentielle à la surface à usiner, direction représentée par la double flèche 8. Les efforts tangentiels sont ainsi repris directement par le support fixe 9 de l'outil 6. L'outil 6 est poussé en direction de la surface à usiner, selon une seconde direction sécante, direction que l'on choisit par exemple radiale telle que représentée par la flèche 10 ; la position radiale de l'outil 6 est commandée par des moyens suiveurs solidaires de la surface à usiner, de sorte que l'outil est amené à suivre, par exemple en fin d'usinage, les mouvements d'oscillation latérale de l'axe I-I selon leur composante horizontale 100.

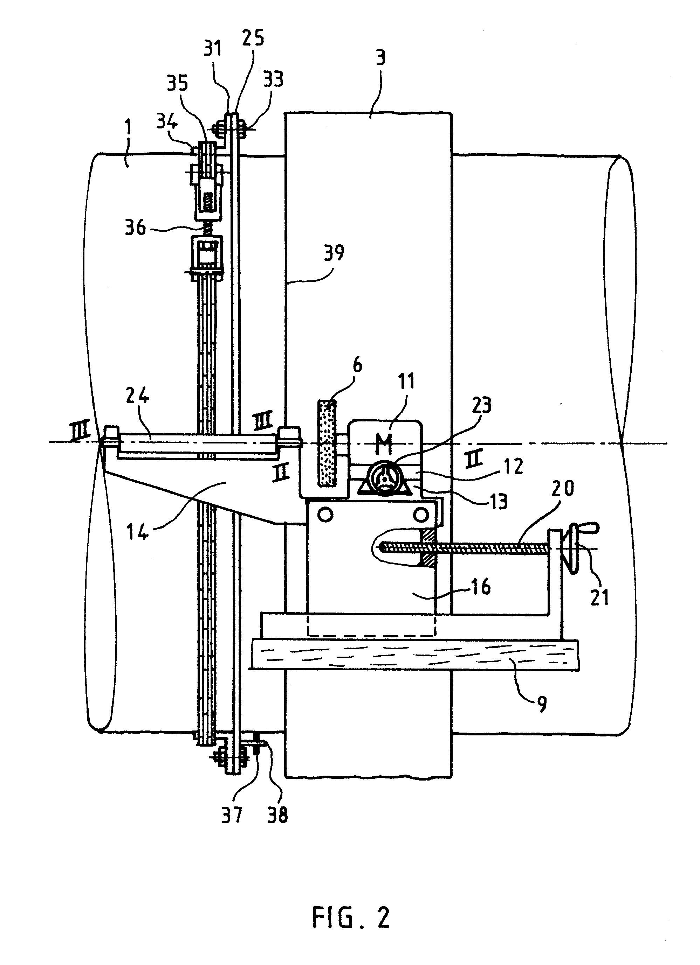

Dans le mode de réalisation représenté sur les figures, l'outil 6 est entraîné en rotation par un moteur 11 selon un axe de rotation II-II dans le plan tangentiel du tube, par exemple parallèle à l'axe I-I ou légèrement incliné. Le moteur 11 et l'outil 6 sont montés sur un chariot de plongée 12, mieux visible sur la figure 2, coulissant sur des glissères 13 d'un chariot suiveur 14, les glissières 13 étant parallèles à la seconde direction sécante. Le chariot suiveur 14 est mobile par rapport à la surface à usiner selon la second direction sécante, représentée par la double flèche 10, et coulisse sur des glissières à billes 15 également parallèles à la seconde direction sécante d'un chariot intermédiaire 16. Un ressort 17 de compression, inséré entre le chariot intermédiaire 16 et le chariot suiveur 14, repousse le chariot suiveur en direction de la surface à usiner.

Le chariot intermédiaire 16 coulisse sur des glissières longitudinales 18 et 19 du support fixe 9 monté sur le sol. Le chariot intermédiaire 16 est commandé par une vis 20 d'avance longitudinale, la vis 20 étant actionnée par une manivelle 21, et définissant la position longitudinale de l'outil 6.

Le chariot de plongée 12 est commandé par une vis radiale 22 et une manivelle 23, réglant la position relative de l'outil 6 par rapport au chariot suiveur 14.

Le chariot suiveur 14 comprend un rouleau suiveur 24, d'axe III-III par exemple parallèle à l'axe I-I du four, et de longueur supérieure à la longueur du bandage 3.

Le rouleau suiveur 24 est destiné à venir en butée contre un gabarit 25 fixé à l'extérieur de la virole 1, le gabarit 25 est formé par l'assemblage de plusieurs secteurs. Par exemple, pour un tube de cinq mètres de diamètre, présentant une longueur développée de quinze mètres environ, on prévoit huit secteurs destinés, par assemblage, à former une surface entourant la virole 1. Il est important que la surface extérieur du gabarit 25 soit conforme à la forme de la surface extérieure de bandage à obtenir. En particulier, pour une forme cylindrique de révolution, il faut une surface extérieure de gabarit 25 parfaitement circulaire. Il faut en outre que le gabarit 25 soit aisément démontable et remontable sur site.

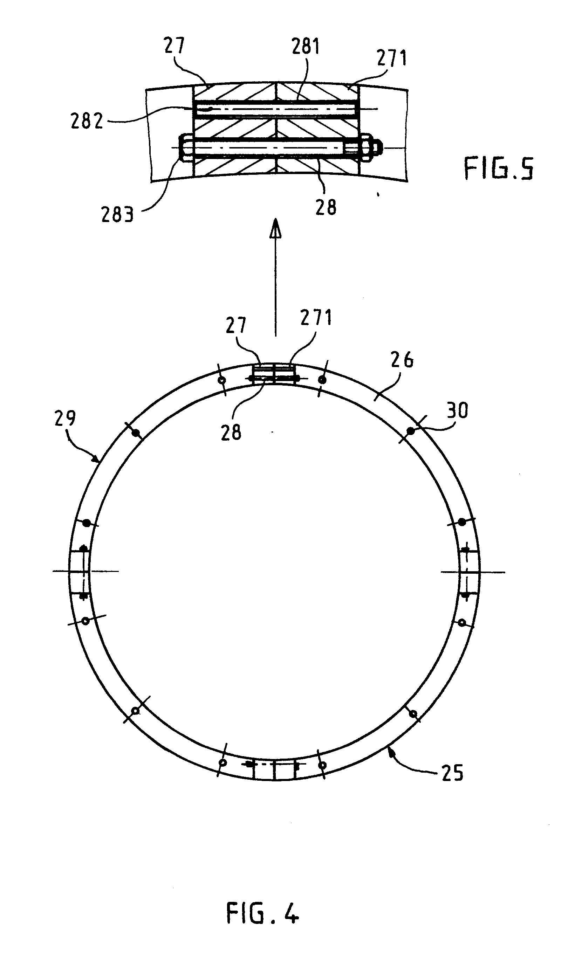

Une façon de réaliser un tel gabarit 25 est illustrée ci-dessous en relation avec les figures 4 et 5.

Le gabarit 25 est réalisé à partir d'une ébauche de couronne 26 formée de secteurs aux extrémités desquels on fixe des blocs 27 et 271 munis d'alésages traversants longitudinaux 28 et 281. On numérote les secteurs ainsi obtenus pour les repositionner dans le même ordre lors du remontage. On assemble les secteurs pour former un gabarit complet 25, en solidarisant les secteurs les uns en bout des autres au moyen d'une goupille de centrage 282 et de boulons 283 insérés respectivement dans les alésages 281 et 28, puis on usine la surface extérieure 29 à la forme voulue.

Le gabarit 25 est muni de trous traversants tels que le trou 30, régulièrement répartis sur toute la couronne, permettant sa fixation. La fixation est assurée par l'intermédiaire d'éléments supports intercalaires 31 en forme d'équerres, dont une première branche comporte un trou oblong 32 pour le passage d'un boulon 33 traversant un trou 30 du gabarit 25, et dont une seconde aile 34 repose sur la surface extérieure de la virole 1. Les secondes ailes 34 des éléments supports intercalaires 31 sont solidarisées contre la surface extérieure de virole 1 par une chaîne périphérique 35 tendue par un dispositif de serrage 36 tel qu'une vis reliant des cavaliers d'extrémité. Un positionnement provisoire et un réglage du gabarit 25 peuvent être assurés au moyen de quelques vis radiales telles que la vis 37 représentée sur la figure 2, traversant des alésages taraudés de pattes longitudinales 38 du gabarit 25, et destinées à venir porter contre la surface extérieure de la virole 1.

Le positionnement du gabarit 25 sur la virole 1 s'effectue de la façon suivante : on assemble les secteurs pour former le gabarit 25 autour de la virole 1 ; on dispose les éléments supports intercalaires 31 sans serrer les boulons 33 ; on fixe les éléments supports intercalaires 31 sur la virole 1 par serrage de la chaîne 35 ; on centre le gabarit 25 selon l'axe I-I choisi, par réglage des vis 37 ; on serre les boulons 33.

Pour effectuer l'usinage, le fonctionnement du dispositif est le suivant : on entraîne en rotation la virole 1 par ses moyens d'entraînement habituels, et on entraîne en rotation l'outil 6 par son moteur 11. L'outil 6 est positionné en début de bandage 3, par exemple au voisinage du côté gauche 39 du bandage 3, au moyen de la vis 20 et de la manivelle 21 ; par actionnement de la manivelle 23 et de la vis 22, on règle le positionnement du chariot de plongée 12, selon la profondeur de passe désirée. L'outil 6 est en appui contre le bandage 3 à usiner, maintenu en appui par l'action du ressort de compression 17 ; le rouleau suiveur 24 est susceptible de venir en butée contre le gabarit 25.

Lorsque l'usinage d'une largeur de bandage égale à la largeur d'outil (6) est terminé, on modifie le réglage longitudinal par la manivelle 21 et la vis 20 pour usiner la bande suivante. Ces opérations de déplacement d'outil sont bien connues dans l'état de la technique. Mais il peut s'avérer préférable d'utiliser une avance longitudinale continue et régulière, au moyen de la vis 20.

Pour réaliser l'usinage d'une surface cylindrique de révolution, on utilise un gabarit 25 à surface extérieure circulaire, et un rouleau suiveur 24 cyclindrique de révolution et d'axe III-III parallèle à l'axe I-I du tube.

Il est toutefois possible d'usiner des surfaces différentes. Par exemple en inclinant l'axe III-III dans un plan diamétral du tube on réalise un cône de révolution ; la surface extérieure du gabarit peut également avoir toute forme non circulaire appropriée ; on peut aussi utiliser un rouleau suiveur 24 non cylindrique, présentant un profil longitudinal désiré par la surface à usiner.

Dans les modes de réalisation dans lesquels l'outil 6 est une meule ou un outil coupant, il est nécessaire de régler très progressivement la plongée du chariot de plongée 12 ; à cet effet on utilise un ressort 17 relativement raide de façon à maintenir le rouleau 24 en contact avec le gabarit. Par contre, lorsque l'on utilise un outil 6 formé d'une bande abrasive, le ressort 17 est moins raide, et le réglage du chariot de plongée 12 peut prendre immédiatement la valeur désirée pour la fin d'usinage si elle est connue ; dans ce dernier cas, en début d'usinage, le rouleau suiveur 24 est décollé du gabarit 25, et vient en butée contre le gabarit en fin d'usinage.

Selon un autre mode de réalisation, représenté schématiquement sur la figure 1, et adapté à l'usinage de pièces plus courtes qu'une virole de four à ciment, le gabarit 25 est remplacé par un arbre support 40, solidarisé à l'intérieur de la virole 1 au moyen de supports radiaux 41, 42 et 43, en une position matérialisant l'axe de rotation désiré de l'ensemble. En bout d'arbre support 40, on monte à rotation un bras de liaison 44 radial destiné à former butée pour le chariot suiveur 14.

Selon un autre mode de réalisation, le gabarit 25 peut constituer un organe de liaison positive entre le chariot suiveur 14 et la virole 1. Dans ce cas, le gabarit 25 forme rail à double effet, retenant le rouleau 24 dans le sens centripète et dans le sens centrifuge. Il faut alors prévoir d'autres moyens élastiques entre le chariot suiveur 14 et l'outil 6.

L'invention permet également de réaliser un dispositif de contrôle, avant ou après usinage, en remplaçant l'outil par un capteur permettant de mesurer la position instantanée d'un point de la surface à contrôler, par rapport au chariot suiveur.

La présente invention n'est pas limitée aux modes de réalisation qui ont été explicitement décrits, mais elle en inclut les diverses variantes et généralisations contenues dans le domaine des revendications ci-après.

## Revendications

1 - Procédé permettant de réaliser alternativement l'usinage et le contrôle d'une surface rotative sollicitée par des moyens d'entraînement, au moyen d'un outil d'usinage ou d'un capteur porté par un support fixe (9), pendant l'opération la surface (3) étant entraînée en rotation par ses propres moyens d'entraînement et défilant devant l'outil d'usinage (6) ou le capteur, l'outil d'usinage (6) ou le capteur étant maintenu fixe, selon une première direction sécante, par rapport au support fixe (9) pour reprendre directement les efforts selon cette première direction sécante, l'outil d'usinage (6) ou le capteur étant mobile par rapport au support fixe (9) selon une seconde direction sécante, caractérisé en ce que la position instantanée de l'outil selon la seconde direction sécante est commandée par des moyens suiveurs en fonction de la position instantanée d'un axe I-I moyen choisi de la surface selon cette seconde direction sécante par rapport au support fixe.

2 - Procédé selon la revendication 1, caractérisé en ce que, pour définir les moyens suiveurs :

a/ on choisit l'axe moyen (I-I) de la surface à usiner,
b/ on positionne un arbre support (40) à l'intérieur de la surface à usiner et selon l'axe moyen (I-I) en le solidarisant par rapport à la surface à usiner,
c/ on relie l'outil (6) ou le capteur et l'arbre support (40) par un bras de liaison (44) monté rotatif en bout d'arbre support, l'outil (6) étant mobile par rapport au bras de liaison par l'intermédiaire de moyens de réglage en position radiale et longitudinale.

3 - Procédé selon la revendication 1, caractérisé en ce que, pour définir les moyens suiveurs :

d/ on choisit l'axe moyen (I-I) de la surface à usiner,
e/ on solidarise un gabarit (25) annulaire à l'extérieur de la surface à usiner, le gabarit étant centré sur l'axe moyen choisi et formant butée limitant le déplacement de l'outil (6) ou du capteur selon la seconde direction sécante.

4 - Dispositif pour la mise en oeuvre d'un procédé selon la revendication 1, permettant de réaliser alternativement l'usinage et le contrôle sur site d'une surface rotative sollicitée par ses propres moyens d'entraînement, le dispositif comprenant un outil d'usinage et/ou un capteur porté par un support fixe (9), l'outil d'usinage ou le capteur étant monté sur un chariot suiveur (14) maintenu fixe par rapport au support fixe (9) selon une première direction sécante et mobile par rapport au support fixe selon une seconde direction sécante présentant une composante radiale (10), le chariot suiveur (14) étant poussé en direction de la surface à usiner par des moyens pousseurs (17), caractérisé en ce que le chariot suiveur (14) est sollicité par des moyens suiveurs liés aux mouvements d'un axe moyen I-I choisi de la surface à usiner (3) selon la seconde direction sécante, de sorte que la position instantanée de l'outil par rapport au support fixe (9) selon la seconde direction sécante est commandée par les moyens suiveurs en fonction de la position instantanée de l'axe moyen (I-I) choisi de la pièce à usiner selon cette même seconde direction sécante.

5 - Dispositif selon la revendication 4, caractérisé en ce que les moyens suiveurs comprennent un bras de liaison radial (44) monté rotatif en bout d'un arbre support (40) solidarisé à la surface à usiner ou à contrôler (3) selon l'axe moyen (I-I), le chariot suiveur (14) étant monté à coulissement par rapport au bras radial (40) et venant buter contre le bras pendant le contrôle, ou en fin de course d'usinage.

6 - Dispositif selon la revendication 4, caractérisé en ce que les moyens suiveurs comprennent un gabarit extérieur annulaire (25) solidarisé à la surface à usiner ou à contrôler par des moyens de fixation permettant de le positionner de manière centrée par rapport à l'axe moyen choisi (I-I), le chariot suiveur (14) comprenant un rouleau suiveur (24) venant en butée selon la seconde direction sécante contre le gabarit extérieur pendant le contrôle ou en fin de course d'usinage.

7 - Dispositif selon la revendication 6, caractérisé en ce que le gabarit extérieur (25) comprend plusieurs secteurs circulaires assemblables bout à bout, des éléments supports intercalaires (31) destinés à relier le gabarit extérieur à la pièce à usiner ou à contrôler, des moyens de fixation (35, 36) pour adapter les éléments supports intercalaires sur la pièce à usiner ou à contrôler, et des moyens de réglage en position radiale (32, 33) et de fixation du gabarit sur les éléments supports intercalaires.

8 - Dispositif selon l'une des revendications 4 ou 6, caractérisé en ce que le chariot suiveur (14) est sollicité par des moyens de poussée (17) tendant à le pousser selon la seconde direction sécante pour amener alternativement l'outil en appui contre la surface à usiner et le chariot suiveur en butée contre le gabarit.

9 - Dispositif selon l'une quelconque des revendications 4 à 7, caractérisé en ce que l'outil (6) ou le capteur est monté sur un chariot de plongée (12), coulissant sur des glissières (13) du chariot suiveur (14) selon la seconde direction, et dont la position est réglée par des moyens de réglage (22, 23) par rapport au chariot suiveur.

10 - Dispositif selon l'une quelconque des revendications 4 à 9, caractérisé en ce que le chariot-suiveur (14) est monté mobile selon la seconde direction sur un chariot intermédiaire (16) qui coulisse sur des glissières longitudinales (18, 19) du bâti fixe, la position du chariot intermédiaire étant définie par des moyens d'avance longitudinale (20, 21).

0224419

FIG. 1

0224419

FIG. 2

0224419

FIG. 3

0224419

FIG.5

FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-3 965 623 (T.R. GRUTZA) | 1,2,4, 5,9,10 | B 23 Q 9/02<br>B 23 Q 35/10<br>B 24 B 9/00 |
| Y | | 3,6-8 | |
| | --- | | |
| Y | FR-A-1 425 397 (CENTRE DE RECHERCHES DE PONT-A-MOUSSON) | 3,6,8 | |
| | --- | | |
| Y | US-A-3 521 875 (S.D. KAPELSOHN) | 7 | |
| | --- | | |
| D,A | US-A-2 748 642 (I. PIRKNER) | 1 | |
| | --- | | |
| A | US-A-3 477 341 (G.H. RICKENBRODE) | 1 | |
| | --- | | DOMAINES TECHNIQUES RECHERCHES (Int. Cl.4) |
| A | US-A-4 046 035 (E.H. BARBER) | 1 | B 23 Q<br>B 24 B<br>B 23 P<br>B 23 C |
| | --- | | |
| A | GB-A- 953 368 (UNITED KINGDOM ATOMIC ENERGY AUTHORITY) | 1 | |
| | --- | | |
| A | FR-A-1 241 231 (SOCIETE DES FORGES ET ATELIERS DU CREUSOT) | 7 | |
| | ----- | | |

Le présent rapport de recherche a été établi pour toutes les revendications

| Lieu de la recherche | Date d'achèvement de la recherche | Examinateur |
|---|---|---|
| LA HAYE | 09-02-1987 | DE GUSSEM J.L. |